# EUROPEAN PATENT SPECIFICATION

(11) **EP 3 798 587 B1**
(45) Date of publication and mention of the grant of the patent: **15.03.2023**
(21) Application number: 20195962.4
(22) Date of filing: 14.09.2020
(51) Int. Cl.: G01G 19/414

(54) **WEIGHING DEVICE, WEIGHING DEVICE WITH LABEL PRINTER, AND REMOTE ORDER PROCESSING SYSTEM**
WÄGEGERÄT, WIEGEGERÄT MIT ETIKETTENDRUCKER UND FERNBESTELLVERARBEITUNGSSYSTEM
DISPOSITIF DE PESAGE, DISPOSITIF DE PESAGE AVEC IMPRIMANTE D'ÉTIQUETTES ET SYSTÈME DE TRAITEMENT DES COMMANDES À DISTANCE

(30) Priority: 25.09.2019 JP 2019174068
(43) Date of publication of application: 31.03.2021
(73) Proprietor: ISHIDA CO., Ltd., Kyoto-shi, Kyoto 606-8392 (JP)
(72) Inventor: HIRATSUKA, Toru, Ritto-shi, Shiga 520-3026 (JP)
(74) Representative: Global IP Europe Patentanwaltskanzlei

(56) References cited:
- DE-A1-102016 015 434

## Description

### TECHNICAL FIELD

The present disclosure relates to a weighing device, a weighing device with a label printer, and a remote order processing system.

### BACKGROUND

In a grocery section of a store such as a supermarket, there are cases in which weighing of products sold by weight is left to a visitor himself/herself visiting the store instead of a salesclerk. Regarding self-service weighing devices used for such weighing of products, a weighing device including a weighing tray on which a product is placed, a weighing unit weighing the product placed on the weighing tray, an input unit receiving an input operation of a visitor, a display unit displaying information for the visitor, and a label issuing unit issuing a label on which an accounting identification code of the product based on a weighing result of the weighing unit is printed is known (for example, refer to JP 2013-108817 A).

Generally, when a visitor himself/herself operates the self-service weighing device described above, the visitor attaches a label on which an accounting identification code is printed to a product and brings the product to a cashier, and thereby accounting processing is performed. Here, recently, a sales form of remote orders from remote order customers to a store via a network has been attempted. In this sales form, generally, a salesclerk weighs a product related to a remote order, accounting processing is performed separately, and a detailed statement for the remote order is issued to a remote order customer. In such a remote order, no one has to attach a label to a product and bring the product to a cashier for accounting processing. For this reason, for example, if a label is issued as in the case of the weighing device in the related art, the issued label is useless, thereby resulting in wasteful issuance of a label.

DE 10 2016 015 434 A1 discloses a weighing device comprising:
a weighing tray on which a product is to be placed;
a weighing unit configured to weigh the product placed on the weighing tray;
an input unit configured to receive an input operation of an operator;
a display unit configured to display information;
a label issuing unit configured to issue a label on which an accounting identification code of the product based on a weighing result of the weighing unit is printed;
an input operation recognition unit configured to recognize a touch operation on the input unit as an input operation; and
an output control unit configured to control the label issuing unit and the display unit based on the input operation with respect to the input unit.

### SUMMARY

An object of the present disclosure is to provide a weighing device and a remote order processing system capable of curbing wasteful issuance of a label.

According to an aspect of the present disclosure, there is provided a weighing device including a weighing tray on which a product is to be placed, a weighing unit configured to weigh the product placed on the weighing tray, an input unit configured to receive an input operation of an operator, a display unit configured to display information, a label issuing unit configured to issue a label on which an accounting identification code of the product based on a weighing result of the weighing unit is printed, and an output control unit configured to control the label issuing unit and the display unit based on the input operation with respect to the input unit. The output control unit is configured to execute first processing in which the label issuing unit issues the label in response to a first input operation and second processing in which the display unit displays the accounting identification code, without causing the label issuing unit to issue the label, in response to a second input operation different from the first input operation.

In the weighing device according to the aspect of the present disclosure, when the output control unit executes the first processing in response to the first input operation of a visitor, a label is issued by the label issuing unit. The issued label is attached to the product and brought to a cashier for accounting processing. On the other hand, when the output control unit executes the second processing in response to the second input operation of a salesclerk, the display unit displays the accounting identification code without causing the label issuing unit to issue a label. The accounting identification code displayed by the display unit can be directly utilized for accounting processing by the salesclerk. Therefore, since issuance of a label as in the case in which the visitor performs the first input operation is omitted by performing the second processing, wasteful issuance of a label can be curbed.

In the embodiment, the display unit may be a touch panel. The first input operation may be the input operation of touching an image showing a label printing button displayed on the touch panel. The second input operation may be the input operation of touching an image showing a product name display field displayed on the touch panel.

In the embodiment, the output control unit may end execution of the second processing when a state in which the display unit displays the accounting identification code while the second processing is executed in response to the second input operation has continued for a certain period of time. In this case, for example, even if the weighing device is neglected in a state in which the display unit displays the accounting identification code, execution of the second processing ends automatically. As a result, for example, a situation in which the visitor uses this weighing device while the second processing remains in operation after the salesclerk has used the weighing device can be curbed, and thus a label can be reliably issued to the visitor.

According to another aspect of the present disclosure, there is provided a remote order processing system configured to process a remote order transmitted via a network using the foregoing weighing device. The remote order processing system includes a reading unit configured to read the accounting identification code for the product related to the remote order displayed by the display unit in response to the second input operation, and a detailed statement issuing unit configured to issue a detailed statement of the remote order in accordance with a reading result of the reading unit when the reading unit reads the accounting identification code.

In the remote order processing system according to the aspect of the present disclosure, since the foregoing weighing device is used, when the accounting identification code displayed by the display unit is read using the reading unit, the salesclerk can perform accounting processing and can issue the detailed statement of the remote order. Thus, while wasteful issuance of a label is curbed, a remote order can be processed smoothly.

According to another aspect of the present disclosure, there is provided a weighing device with a label printer, the weighing device being configured to display a weighed value and a price of a purchasing product when the purchasing product is designated from a plurality of kinds of products displayed by a display unit and the purchasing product is put on a weighing tray. The weighing device includes a first input portion configured to receive a first input, and a second input portion configured to receive a second input different from the first input. A label having an accounting identification code printed thereon is issued when the first input portion receives the first input. The display unit is configured to display the accounting identification code when the second input portion receives the second input.

In the weighing device with a label printer according to the aspect of the present disclosure, when the first input portion is operated, a label having an accounting identification code printed thereon is issued, and when the second input portion is operated, the display unit displays an accounting identification code. For example, the issued label is brought to the cashier for accounting processing by the visitor. On the other hand, for example, the accounting identification code displayed by the display unit can be directly utilized for accounting processing by the salesclerk. Therefore, for example, since issuance of a label as in the case in which the visitor operates the first input portion is omitted by operating the second input portion, wasteful issuance of a label can be curbed.

In the embodiment, the display unit may be a touch panel. The first input portion may be an image showing a label printing button displayed on the touch panel. The second input portion may be an image showing a product name display field displayed as the purchasing product on the touch panel.

In the embodiment, the display unit may be configured to display the accounting identification code for a certain period of time when the image showing the product name display field has been subjected to a touch operation, and the display unit may be configured to return to an initial screen displaying the plurality of kinds of products after elapse of a certain period of time. In this case, for example, even if the weighing device with a label printer is neglected in a state in which the display unit displays the accounting identification code, the display unit returns to the initial screen after elapse of a certain period of time. As a result, for example, a situation in which the visitor uses this weighing device with a label printer while the accounting identification code remains displayed by the display unit after the salesclerk has used the weighing device with a label printer can be curbed, and thus a label can be reliably issued to the visitor.

According to another aspect of the present disclosure, there is provided a remote order processing system configured to process a remote order transmitted via a network, the remote order processing system using the foregoing weighing device with a label printer. The remote order processing system includes a reading unit configured to read the accounting identification code for a purchasing product related to the remote order displayed by the display unit when the second input portion receives the second input, and a detailed statement issuing unit configured to issue a detailed statement of the remote order in accordance with a reading result of the accounting identification code of the reading unit.

In the remote order processing system according to the aspect of the present disclosure, since the foregoing weighing device with a label printer is used, when the accounting identification code displayed by the display unit is read using the reading unit, the salesclerk can perform accounting processing and can issue the detailed statement of the remote order. Thus, while wasteful issuance of a label is curbed, a remote order can be processed smoothly.

According to the present disclosure, it is possible to curb wasteful issuance of a label.

### BRIEF DESCRIPTION OF THE DRAWINGS

Fig. 1 is a view of a configuration of a network including a weighing device according to an embodiment.
Fig. 2 is a perspective view of the weighing device according to the embodiment.
Fig. 3 is a block diagram of the weighing device according to the embodiment.
Fig. 4 is a view showing an example of an initial screen.
Fig. 5 is a view showing an example of a purchasing product designation screen.
Fig. 6 is a view showing an example of an output reception screen.
Fig. 7 is a view showing an example of a printed label.
Fig. 8 is a view showing an example of a displayed barcode.
Fig. 9 is a flowchart exemplifying processing of the weighing device.
Fig. 10 is a flowchart exemplifying processing of a remote order processing system.

### DETAILED DESCRIPTION

Hereinafter, an embodiment of the present disclosure will be described with reference to the drawings. In the drawings, the same reference signs are applied to elements which are the same or equivalent, and duplicate description will be omitted.

### (1) Overall constitution

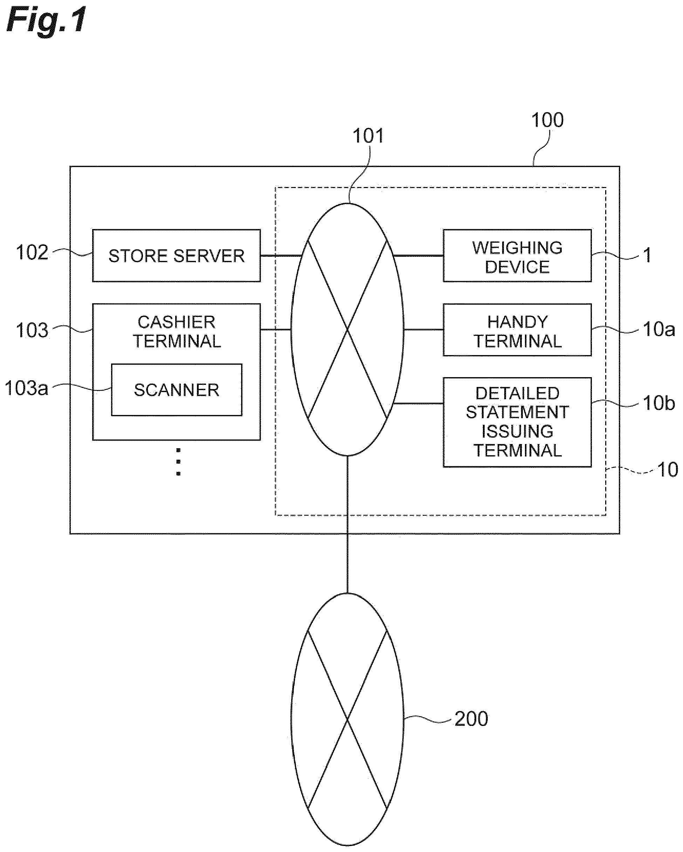

A weighing device 1 shown in Fig. 1 is a self-service weighing device used for weighing a product at a grocery section in a store 100 such as a supermarket by a visitor himself/herself or a salesclerk. In the present disclosure, products include products sold by weight such as fruit, vegetables, and delicatessen food. Here, selling-by-weight includes a form of calculating a purchase price by multiplying a unit price by a mass as a weighing result, and a form of calculating a purchase price by multiplying a unit price by the number of purchasing products confirmed using a mass as a weighing result.

For example, in a case in which a visitor himself/herself operates the weighing device 1, when the visitor weighs a desired product, the weighing device 1 can issue a label on which a barcode (accounting identification code) for the product based on a mass value (a weighing result of a weighing unit) of the product is printed. The barcode includes accounting information such as a price of the product based on the mass value of the product, and a one-dimensional barcode can be used, for example. The visitor attaches the issued label to the product and brings the product to a desired cashier terminal 103. A form in which a product is put in a container and weighed may be adopted (hereinafter, the same shall apply).

As shown in Fig. 1, the weighing device 1 can communicate with each of a store server 102 and a plurality of cashier terminals 103 via a network 101 built into the store 100. The store server 102 stores various kinds of information related to products. Information (specifically, prices of products, product numbers (ID numbers), and the like) related to products input to each of the cashier terminals 103 is sent to the store server 102 via the network 101, and this information is accumulated therein. Each of the cashier terminals 103 is provided with a scanner 103a. For example, when a visitor himself/herself operates the weighing device 1, the label having a barcode printed thereon is read using the scanner 103a at the cashier terminal 103, and thus each of the cashier terminals 103 calculates a charged amount for the visitor, calculates change for a payment of the visitor, or the like.

Here, the weighing device 1, which is operated by a salesclerk, is configured to be used as one of the constituents of a remote order processing system 10. The remote order processing system 10 performs processing of a remote order. A remote order denotes an order from a remote order customer via an internet communication network (network) 200. A remote order customer is a customer making an order without visiting the store 100. The remote order processing system 10 can communicate with the internet communication network 200 via the network 101.

In this form, the store server 102 receives a remote order from the remote order customer via the internet communication network 200. The store server 102 temporarily stores various kinds of information regarding a product related to a remote order. For example, the store server 102 generates product picking instruction information for a salesclerk based on the information regarding the product related to the remote order. The product picking instruction information is information for a salesclerk performing work of picking a product in the store 100 in accordance with a remote order. Work of picking a product includes weighing of a product using the weighing device 1.

In the remote order processing system 10, a handy terminal 10a and a detailed statement issuing terminal (detailed statement issuing unit) 10b are provided such that they can communicate with each other via the network 101 in the store 100. The handy terminal 10a has a function of a scanner. The handy terminal 10a functions as a reading unit reading a barcode for a product related to a remote order when a salesclerk performs work of picking a product in accordance with the remote order. Regarding a barcode read by the handy terminal 10a, it is possible to use a barcode for a product (purchasing product) related to a remote order which is displayed on a touch panel 4 of the weighing device 1 in response to a second input operation (which will be described below) of a salesclerk. The handy terminal 10a transmits information including the weighed value and the price of the purchasing product indicated by the read barcode to the detailed statement issuing terminal 10b via the network 101. The detailed statement issuing terminal 10b generates detailed information of a remote order in accordance with a reading result of a barcode of the handy terminal 10a based on the received information. For example, the detailed statement issuing terminal 10b has a printer issuing a purchase statement of a remote order in accordance with generated detailed information.

Therefore, in the remote order processing system 10, there is no need to attach an issued label to a product and to bring this product to the cashier terminal 103. In order to realize this, the weighing device 1 is configured to switch between a mode of issuing a label and a mode of issuing no label depending on whether a visitor himself/herself operates the weighing device 1 or a salesclerk operates the weighing device 1.

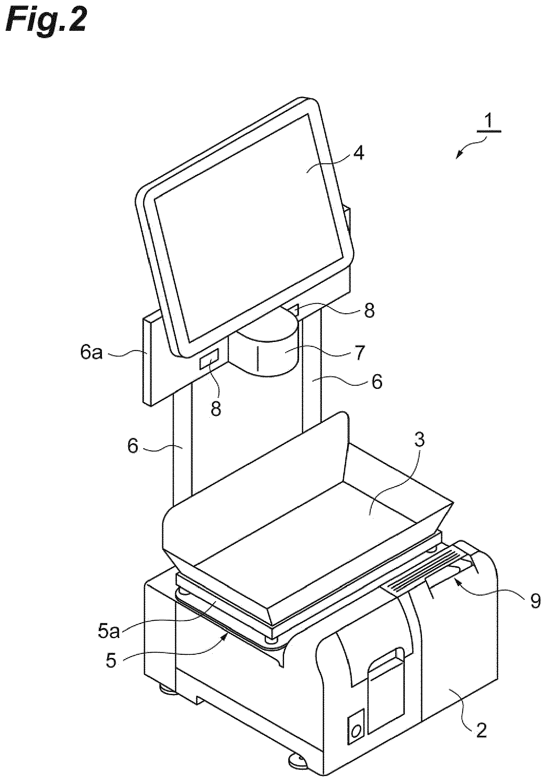

As shown in Fig. 2, the weighing device 1 includes a main body unit 2, a weighing tray 3, and a touch panel (an input unit and a display unit) 4. Here, the weighing device 1 is configured to serve as a weighing device with a label printer. When a purchasing product is designated from a plurality of kinds of products displayed on the touch panel 4 and the purchasing product is put on the weighing tray 3, the weighing device with a label printer displays the weighed value and the price of the purchasing product.

The main body unit 2 is provided with a weighing mechanism (weighing unit) 5. The weighing tray 3 is detachably mounted on a tray mounting portion 5a of the weighing mechanism 5 protruding upward from the main body unit 2. The touch panel 4 is supported by two struts 6 extending upward from behind the main body unit 2. The touch panel 4 is used for visual checking or an operation of a visitor when the visitor himself/herself operates the weighing device 1. The touch panel 4 is used for visual checking or an operation of a salesclerk (which will be described below in detail) when the salesclerk performs work of picking a product in accordance with a remote order or when the salesclerk performs various kinds of setting or the like.

### (2) Constitution of each part

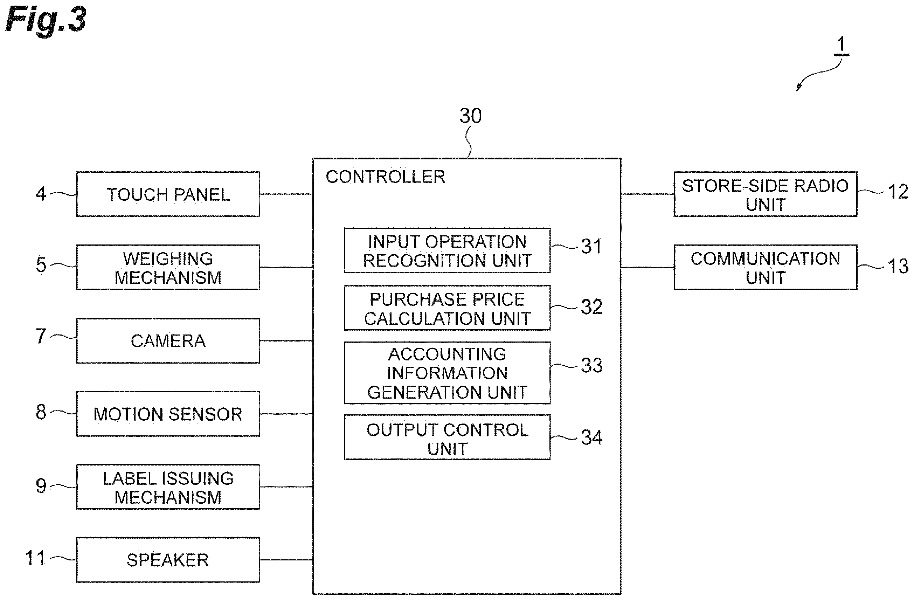

As shown in Figs. 2 and 3, the weighing device 1 includes the weighing tray 3, the touch panel 4, the weighing mechanism (weighing unit) 5, a camera 7, motion sensors 8, a label issuing mechanism (label issuing unit) 9, a speaker 11, a store-side radio unit 12, a communication unit 13, and a controller 30. Among these constituent elements, the weighing mechanism 5, the label issuing mechanism 9, the store-side radio unit 12, the communication unit 13, and the controller 30 are accommodated inside the main body unit 2.

### (2-1) Weighing tray

A product is placed on the weighing tray 3. For example, the weighing tray 3 may be made of a metal. The front surface of the weighing tray 3 may be colored such that a container can be easily identified.

### (2-2) Weighing mechanism

The weighing mechanism 5 weighs a product placed on the weighing tray 3. The weighing mechanism 5 transmits the mass value (weighing signal) of a product to the controller 30.

### (2-3) Camera

The camera 7 is installed in a support member 6a bridging across the two struts 6 below the touch panel 4. The camera 7 captures an image of an image capturing region including the weighing tray 3 from above. The camera 7 transmits image data of the image capturing region to the controller 30.

### (2-4) Motion sensor

For example, the motion sensors 8 are installed in the support member 6a such that they are positioned on the left side and the right side of the camera 7. The motion sensors 8 detect the presence of a person around the weighing tray 3. When the presence of a person around the weighing tray 3 is detected, the motion sensors 8 transmit a signal indicating the situation to the controller 30.

### (2-5) Label issuing mechanism

The label issuing mechanism 9 issues a label on which a barcode of a product based on the weighing result of the weighing mechanism 5 is printed for a visitor. The label issuing mechanism 9 is constituted of a label cassette, a plurality of sensors, and the like. The label issuing mechanism 9 prints a barcode or the like indicating information including the weighed value and the price of a purchasing product on paper fed from the label cassette and issues the paper as a label. Regarding label paper, paper having adhesiveness on only the rear surface may be used.

### (2-6) Touch panel

The touch panel 4 displays an image including various kinds of information for a visitor or a salesclerk. Displaying of the touch panel 4 is controlled by the controller 30 (which will be described below). The touch panel 4 functions as an input unit receiving an input operation. Information of an input operation received by the touch panel 4 is transmitted to the controller 30.

For example, when the motion sensors 8 detect the presence of a person due to approach of a visitor or a salesclerk, the touch panel 4 displays an initial screen. The touch panel 4 may display a plurality of kinds of products in the initial screen. Furthermore, the touch panel 4 may display a purchasing product designation screen and an output reception screen.

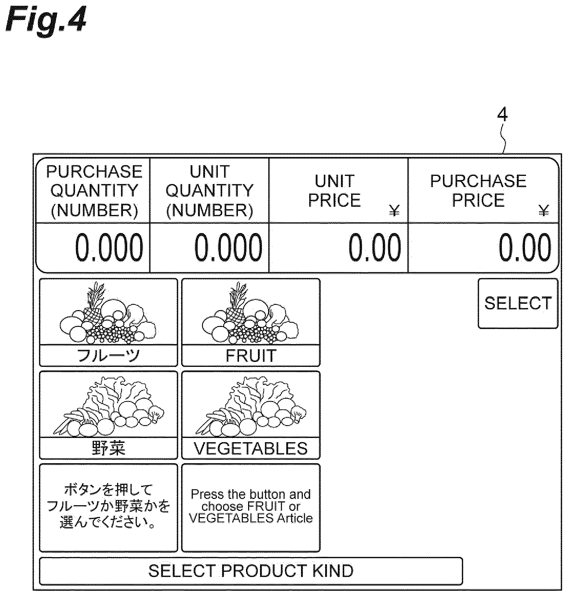

The initial screen is a standby screen standing by for starting of weighing a product by a visitor or a salesclerk. As the initial screen, the touch panel 4 displays an image for designating the kind of a purchasing product, for example. A purchasing product denotes a product which becomes a weighing target of a visitor or a salesclerk. The kind of a purchasing product denotes the kind of a product which is desired to be purchased among a plurality of product kinds. Fig. 4 is a view showing an example of the initial screen. In the example of Fig. 4, an image showing fruit and vegetables as a plurality of product kinds is displayed. In addition, in the example of Fig. 4, an image for prompting a visitor to select the product kind and an image showing selection buttons for deciding the selected product kind are displayed.

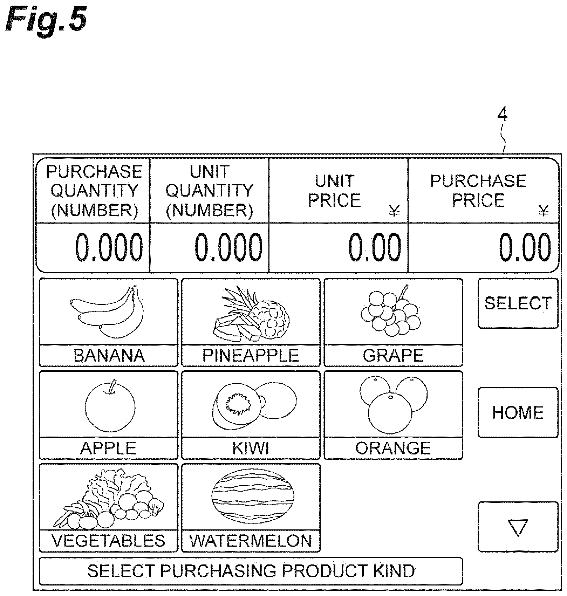

The purchasing product designation screen is a screen for designating a purchasing product. Fig. 5 is a view showing an example of the purchasing product designation screen. As shown in Fig. 5, as an example of a case in which fruit is selected as a product kind in Fig. 4, the touch panel 4 displays a banana, a pineapple, a grape, an apple, a kiwi, an orange, and a watermelon. For example, when the purchasing product is a pineapple, a visitor or a salesclerk touches the image showing a pineapple, and thus the purchasing product is designated.

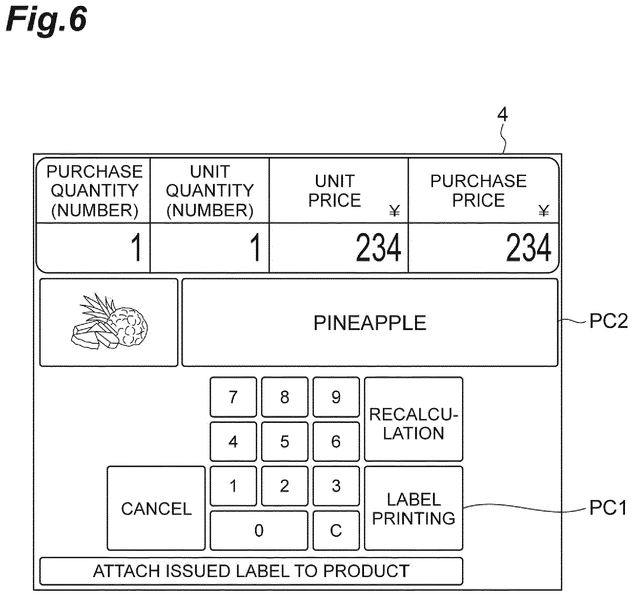

The output reception screen is a screen receiving an input operation for outputting a barcode used in accounting. Fig. 6 is a view showing an example of the output reception screen. In the screen of Fig. 6, an image showing fields displaying the purchase quantity (number), the unit quantity (number), the unit price, and the purchase price regarding the purchasing product is displayed. In addition, Fig. 6 displays an image depicting the purchasing product, an image showing a product name display field for the purchasing product, an image showing a numeric keypad for selecting the number of purchasing products, an image showing a recalculation button for updating the purchase price after the number of purchasing products is decided, and an image showing a label printing button for outputting a label to a visitor.

The purchase quantity (number) denotes the mass as a weighing result of the weighing mechanism 5 or the number of purchasing products which has been input using the numeric keypad. Here, regarding a pineapple which is the purchasing product, the price for one product is set as the unit quantity (number), and the number of purchasing products which has been input using the numeric keypad is used. In this case, whether or not the number of purchasing products which has been input using the numeric keypad coincides with the actual number may be judged for confirmation using the weighing result of the weighing mechanism 5. Instead of the price for one product, the price per unit mass may be set as the unit quantity (number). In this case, the mass as a weighing result of the weighing mechanism 5 is used as the purchase quantity (number).

### (2-7) Speaker

The speaker 11 is built into the support member 6a, and it may output audio including various kinds of information for a visitor. For example, when the motion sensors 8 detect the presence of a person due to approach of a visitor, the speaker 11 may output audio linked to an image displayed on the touch panel 4.

### (2-8) Store-side radio unit

The store-side radio unit 12 performs radio communication with a portable terminal carried by a salesclerk. When a residual quantity of a label roll in the label issuing mechanism 9 becomes equal to or less than a predetermined quantity or the like, the store-side radio unit 12 may transmit a signal indicating the situation to the portable terminal of a salesclerk.

### (2-9) Communication unit

The communication unit 13 communicates with each of the store server 102 and the plurality of cashier terminals 103. For example, the communication unit 13 may transmit information related to a label issued by the label issuing mechanism 9 to each of the store server 102 and the plurality of cashier terminals 103. Examples of information related to a label include a time when a label is issued in addition to the price of a product specified in a label.

### (2-10) Control unit

The controller 30 is a part controlling various kinds of operation in the weighing device 1 and is constituted of a central processing unit (CPU), a read only memory (ROM), a random access memory (RAM), a storage medium (a hard disk or a solid state drive), and the like. As shown in Fig. 3, as conceptual parts for executing various kinds of control processing in the weighing device 1, the controller 30 has an input operation recognition unit 31, a purchase price calculation unit 32, an accounting information generation unit 33, and an output control unit 34. For example, such conceptual parts can be configured to serve as software in which a program stored in the ROM is loaded on the RAM and executed by the CPU. The controller 30 may be configured to serve as hardware such as an electronic circuit.

### (2-10-1) Input operation recognition unit

The input operation recognition unit 31 recognizes a touch operation on the touch panel 4 as an input operation. The input operation recognition unit 31 may display an image showing a predetermined operation button for each predetermined display region on the touch panel 4. The input operation recognition unit 31 may distinctively recognize a plurality of input operations for each touch operation of the corresponding button.

The input operation recognition unit 31 recognizes an operation of designating a purchasing product by a visitor or a salesclerk. For example, in a case in which the purchasing product is a pineapple, when a visitor or a salesclerk performs a touch operation with respect to the image showing "fruit" in Fig. 4 and performs a touch operation with respect to the image showing "pineapple" in Fig. 5 displayed in accordance therewith, the input operation recognition unit 31 recognizes an operation of designating a purchasing product. In addition, as an operation of designating a purchasing product, the input operation recognition unit 31 may recognize an input operation with respect to the numeric keypad or the like in Fig. 6 designating the number of purchasing products of a visitor or a salesclerk.

When an operation of designating a purchasing product is recognized, in a state in which the purchasing product is being weighed by the weighing mechanism 5, the input operation recognition unit 31 can recognize an input operation for outputting a barcode used for accounting. An input operation for outputting a barcode includes a first input operation performed by a visitor and the second input operation performed by a salesclerk.

The first input operation is an input operation of a touch operation with respect to a first image (first input portion) PC1 showing the label printing button displayed on the touch panel 4. As shown in Fig. 6, the first image PC1 is displayed in a form in which a visitor can recognize that a touch operation needs to be performed on the touch panel 4 for accounting. That is, the first input operation is an input operation which is assumed to be performed by a visitor.

The second input operation is an input operation of a touch operation with respect to a second image (second input portion) PC2 showing the product name display field displayed on the touch panel 4. As shown in Fig. 6, the second image PC2 is displayed in a form in which a visitor does not generally recognize that a touch operation needs to be performed on the touch panel 4. That is, the second input operation is an input operation which is assumed to be performed by a salesclerk.

### (2-10-2) Purchase price calculation unit

When a purchasing product is designated in the purchasing product designation screen, the purchase price calculation unit 32 extracts unit price information which coincides with the purchasing product from the unit price information (information the price per unit mass or unit number) stored in the store server 102. The purchase price calculation unit 32 calculates the purchase price of the purchasing product by multiplying the purchase quantity (the mass or the purchase number of the purchasing product) by the unit price using the weighed value weighed by the weighing mechanism 5.

### (2-10-3) Accounting information generation unit

The accounting information generation unit 33 generates information to be printed on a label issued by the label issuing mechanism 9. Regarding this information, information related to a barcode used for accounting is included. Regarding information to be printed on a label, for example, information related to the name of a purchasing product, the day and the time of weighing of a purchasing product, the sell-by date of a purchasing product, the mass of a purchasing product, and the character string showing the purchase price of a purchasing product calculated by the purchase price calculation unit 32 may be included.

### (2-10-4) Output control unit

The output control unit 34 controls the label issuing mechanism 9 and displaying of the touch panel 4 based on an input operation with respect to the touch panel 4. More specifically, the controller 30 is configured to cause the output control unit 34 to execute first processing and second processing. That is, the controller 30 is a circuit configured to cause the output control unit 34 to execute the first processing and the second processing.

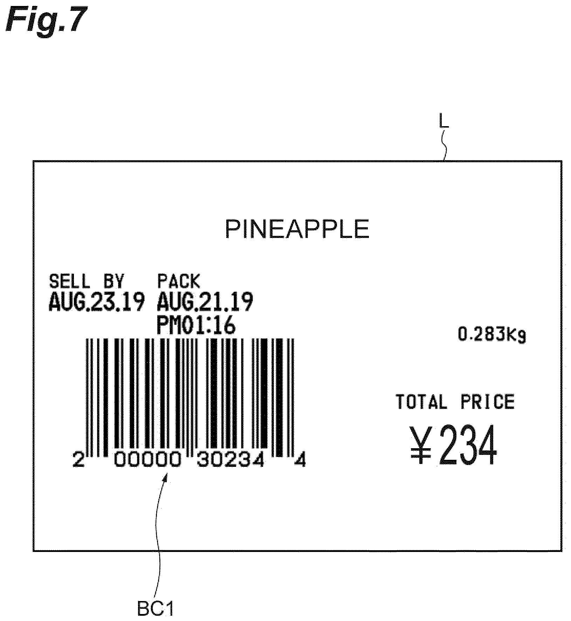

The first processing is processing in which the label issuing mechanism 9 issues a label in response to the first input operation of a visitor. When the first input operation in which the first image PC1 displaying "label printing" in Fig. 6 has been subjected to a touch operation is recognized by the input operation recognition unit 31, as shown in Fig. 7, the output control unit 34 causes the label issuing mechanism 9 to issue a label L on which a barcode BC1 generated by the accounting information generation unit 33 is printed. Accordingly, for example, the label L, on which various kinds of information including the barcode BC1 exemplified in Fig. 7 is printed thereon, is issued to the visitor.

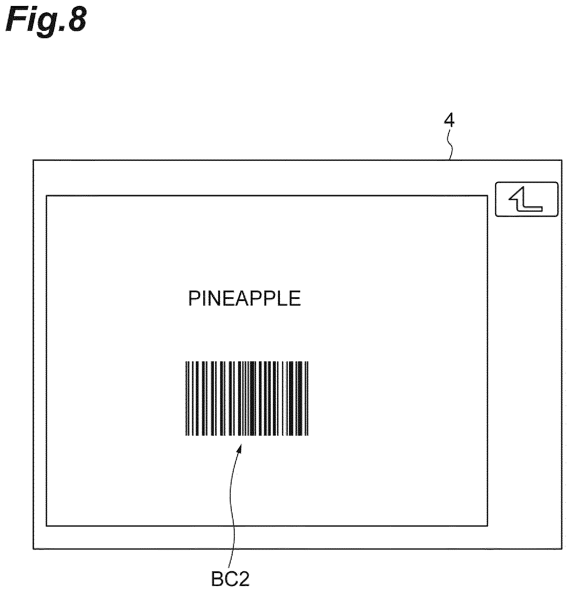

The second processing is processing in which the touch panel 4 displays a barcode in response to the second input operation of a salesclerk without causing the label issuing mechanism 9 to issue the label L. When the second input operation in which the second image PC2 displaying "pineapple" in Fig. 6 has been subjected to a touch operation is recognized by the input operation recognition unit 31, as shown in Fig. 8, the output control unit 34 causes the touch panel 4 to display a barcode BC2 generated by the accounting information generation unit 33. Accordingly, the barcode BC2 is output to the salesclerk without issuing the label L.

In addition, the output control unit 34 may end execution of the second processing and the touch panel 4 may display the initial screen (return to the initial screen) when a state in which the touch panel 4 displays the barcode BC2 while the second processing is executed in response to the second input operation has continued for a certain period of time. For example, the output control unit 34 may cause the touch panel 4 to return to the initial screen when an image showing a bent arrow denoting "return" in Fig. 8 has been subjected to a touch operation.

In the weighing device 1 having a constitution as described above, when the first image PC1 displayed on the touch panel 4 is operated, the label L having the barcode BC1 printed thereon is issued, and when the second image PC2 displayed on the touch panel 4 is operated, the touch panel 4 displays the barcode BC2. In addition, the second image PC2 has been subjected to a touch operation, the touch panel 4 displays the barcode BC2 for a certain period of time, and the touch panel 4 returns to the initial screen displaying a plurality of kinds of products after elapse of a certain period of time.

### (3) Processing procedure

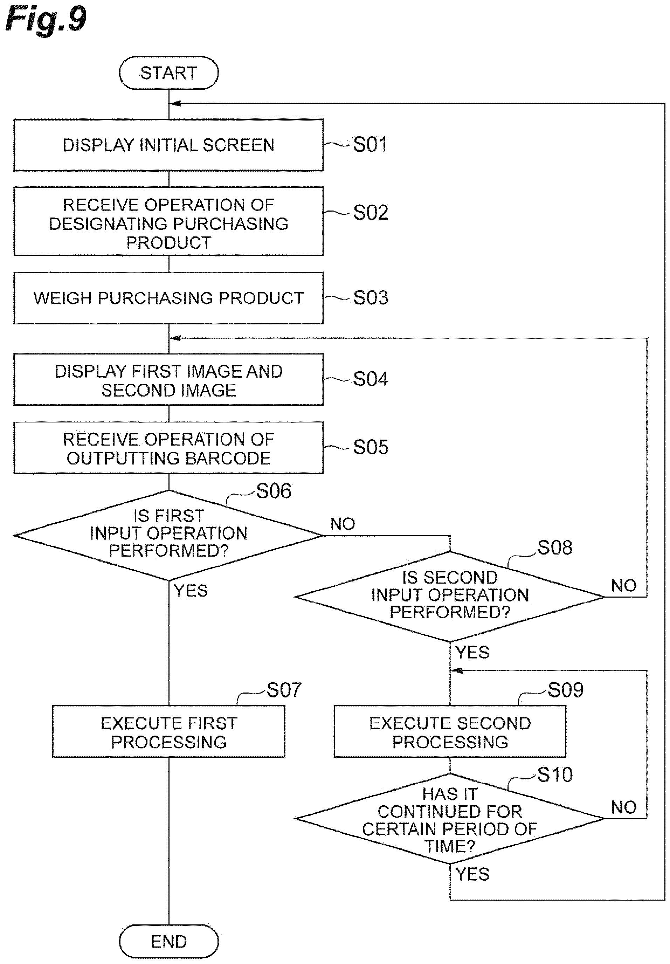

Next, operation of the weighing device 1 will be described with reference to Fig. 9 separately for a case in which the weighing device 1 is operated by a visitor and a case in which the weighing device 1 is operated by a salesclerk. Fig. 9 is a flowchart exemplifying processing of the weighing device.

First, a case in which the weighing device 1 is operated by a visitor will be described. As shown in Fig. 9, for example, when the motion sensors 8 detect the presence of a person due to approach of the visitor, the touch panel 4 displays the initial screen displaying a plurality of kinds of products (Step S1). For example, the visitor selects a desired product (for example, a pineapple) from a plurality of kinds of products placed in a product section. When the visitor having this desired product as a purchasing product touches an image showing a pineapple in the purchasing product designation screen exemplified in Fig. 5, an operation of designating a purchasing product is received (Step S2). Thereafter, the purchasing product is placed on the weighing tray 3, and the purchasing product placed on the weighing tray 3 is weighed using the weighing mechanism 5 (Step S3). The weighed value of the purchasing product is output to the controller 30 from the weighing mechanism 5 and is used for generating information related to a barcode by the purchase price calculation unit 32 and the accounting information generation unit 33.

The touch panel 4 displays the first image PC1 showing the label printing button and the second image PC2 showing the product name display field (Step S4). Regarding an operation of outputting a barcode, the visitor performs the first input operation which is a touch operation with respect to the first image PC1 (Step S5). In this case, in judging whether or not the operation of outputting a barcode is the first input operation (Step S5), it is judged that the operation is the first input operation (Step S5: YES). Thereafter, the first processing is executed, and the label L having the barcode BC1 printed thereon is issued by the label issuing mechanism 9 (Step S7). The visitor attaches the label L issued from the label issuing mechanism 9 in this manner to the purchasing product and brings the purchasing product to the cashier terminal 103.

Subsequently, a case in which the weighing device 1 is operated by a salesclerk will be described. As shown in Fig. 9, for example, when the motion sensors 8 detect the presence of a person due to approach of the salesclerk, the touch panel 4 displays the initial screen displaying a plurality of kinds of products (Step S1). For example, the salesclerk selects a desired product (for example, a pineapple) of a remote order customer from a plurality of kinds of products placed in a product section in accordance with product picking instruction information. When the salesclerk having this desired product as a purchasing product touches an image showing a pineapple in the purchasing product designation screen exemplified in Fig. 5, an operation of designating a purchasing product is received (Step S2). Thereafter, the purchasing product is placed on the weighing tray 3, and the purchasing product placed on the weighing tray 3 is weighed using the weighing mechanism 5 (Step S3). The weighed value of the purchasing product is output to the controller 30 from the weighing mechanism 5 and is used for generating information related to a barcode by the purchase price calculation unit 32 and the accounting information generation unit 33.

The touch panel 4 displays the first image PC1 showing the label printing button and the second image PC2 showing the product name display field (Step S4). Regarding an operation of outputting a barcode, the salesclerk performs the second input operation which is a touch operation with respect to the second image PC2 (Step S5). In this case, in judging whether or not the operation of outputting a barcode is the first input operation (Step S5), it is judged that the operation is not the first input operation (Step S5: NO). Thereafter, in judging whether or not the operation of outputting a barcode is the second input operation (Step S8), it is judged that the operation is the second input operation (Step S8: YES). Thus, the second processing is executed, and the touch panel 4 displays the barcode BC2 without issuing the label L from the label issuing mechanism 9 (Step S9).

When a state in which the touch panel 4 displays the barcode BC2 while the second processing is executed has not continued for a certain period of time (Step S10: NO), execution of the second processing is repeated (continues). When a state in which the touch panel 4 displays the barcode BC2 while the second processing is executed has continued for a certain period of time (Step S10: YES), execution of the second processing ends, and the touch panel 4 displays the initial screen (returns to the initial screen).

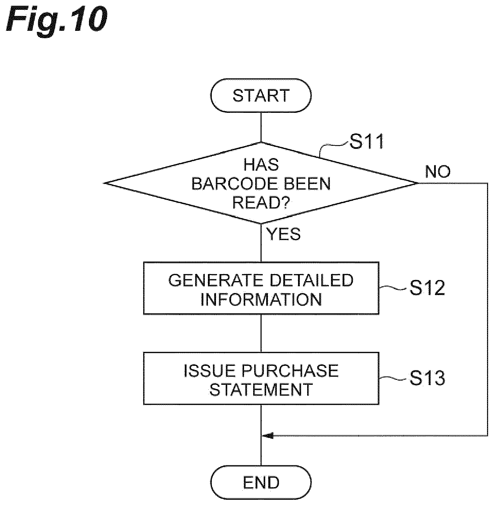

In judging whether or not the operation of outputting a barcode is the second input operation (Step S8), when it is judged that the operation is not the second input operation (Step S8: NO), for example, the touch panel 4 may return to processing of displaying the first image PC1 and the second image PC2 (Step S4). The salesclerk reads the barcode BC2 displayed on the touch panel 4 in this manner using the scanner of the handy terminal 10a, thereby issuing a detailed statement shown in Fig. 10.

Fig. 10 is a flowchart exemplifying processing of the remote order processing system. As shown in Fig. 10, when a salesclerk reads the barcode BC2 displayed on the touch panel 4 with the scanner of the handy terminal 10a, in judging whether or not a barcode is read (Step S11), it is judged that a barcode is read (Step S11: YES). In this case, the detailed statement issuing terminal 10b generates detailed information of a remote order in accordance with the reading result of the barcode BC2 based on the information received from the handy terminal 10a (Step S12). The detailed statement issuing terminal 10b issues the purchase statement of the remote order in accordance with the generated detailed information (Step S13). When it is judged that a barcode is not read (Step S11: NO), processing in Fig. 10 ends as it stands.

### (4) Operations and effects

In the weighing device 1 according to the aspect of the present disclosure, when the output control unit 34 of the controller 30 executes the first processing in response to the first input operation of a visitor, the label L including the barcode BC1 is issued by the label issuing mechanism 9. The issued label L is brought to the cashier terminal 103 by the visitor for accounting processing. On the other hand, when the output control unit 34 of the controller 30 executes the second processing in response to the second input operation of a salesclerk, the touch panel 4 displays the barcode BC2 without issuing the label L by the label issuing mechanism 9. For example, the barcode BC2 displayed on the touch panel 4 can be directly utilized for accounting processing by the salesclerk using the handy terminal 10a. Therefore, since issuance of the label L as in the case in which a visitor performs the first input operation is omitted by performing the second processing, wasteful issuance of the label L can be curbed.

In the weighing device 1, the output control unit 34 of the controller 30 ends execution of the second processing when a state in which the touch panel 4 displays the barcode BC2 while the second processing is executed in response to the second input operation has continued for a certain period of time. Accordingly, for example, even if the weighing device 1 is neglected in a state in which the second processing is executed, execution of the second processing ends automatically. As a result, for example, a situation in which a visitor uses this weighing device 1 while the second processing remains in operation after a salesclerk has performed weighing related to a remote order using the weighing device 1 can be curbed, and thus the label L can be reliably issued to the visitor.

The weighing device 1 is a weighing device with a label printer displaying the weighed value and the price of a purchasing product when the purchasing product is designated from a plurality of kinds of products displayed on the touch panel 4 and the purchasing product is put on the weighing tray 3. The weighing device 1 with a label printer includes a first input portion operated by a visitor and a second input portion operated by a salesclerk. When the first input portion is operated, the weighing device 1 with a label printer issues the label L having the barcode BC1 printed thereon, and when the second input portion is operated, the touch panel 4 displays the barcode BC2. Thus, according to the weighing device 1 with a label printer, the issued label L is brought to the cashier terminal 103 for accounting processing by a visitor, for example. On the other hand, the barcode BC2 displayed on the touch panel 4 can be directly utilized for accounting processing by a salesclerk. Therefore, for example, since issuance of the label L as in the case in which a visitor operates the second input portion is omitted by operating the first input portion, wasteful issuance of the label L can be curbed.

In the weighing device 1 with a label printer, the touch panel 4 displays the barcode BC2 for a certain period of time when the second image PC2 showing the product name display field has been subjected to a touch operation, and the touch panel 4 returns to the initial screen displaying a plurality of kinds of products after elapse of a certain period of time. Accordingly, for example, even if the weighing device 1 with a label printer is neglected in a state in which the touch panel 4 displays the barcode BC2, the touch panel 4 returns to the initial screen after elapse of a certain period of time. As a result, for example, a situation in which a visitor uses this weighing device 1 with a label printer while the barcode BC2 remains displayed by the touch panel 4 after a salesclerk has used the weighing device 1 with a label printer can be curbed, and thus the label L can be reliably issued to the visitor.

The remote order processing system 10 performs processing of a remote order from a remote order customer via the internet communication network 200 using the foregoing weighing device (weighing device with a label printer) 1. The remote order processing system 10 includes the handy terminal 10a reading the barcode BC2 on a purchasing product related to a remote order displayed by the touch panel 4 in response to the second input operation of a salesclerk, and the detailed statement issuing unit issuing a detailed statement of a remote order in accordance with a reading result of the reading unit when the handy terminal 10a has read the barcode BC2.

In the remote order processing system according to the aspect of the present disclosure, since the foregoing weighing device is used, when the accounting identification code displayed by the display unit is read using the reading unit, a salesclerk can perform accounting processing and can issue a detailed statement of a remote order. Thus, while wasteful issuance of a label is curbed, a remote order can be processed smoothly.

The remote order processing system 10 performs processing of a remote order from a remote order customer via the internet communication network 200 using the foregoing weighing device (weighing device with a label printer) 1. The remote order processing system 10 includes the handy terminal 10a reading the barcode BC2 on a purchasing product related to a remote order displayed by the touch panel 4 in response to the second input operation of a salesclerk (when the second input portion is operated), and the detailed statement issuing terminal 10b issuing a detailed statement of a remote order in accordance with a reading result of the barcode BC2 of the handy terminal 10a.

In the remote order processing system 10, since the foregoing weighing device (weighing device with a label printer) 1 is used, when the barcode BC2 displayed on the touch panel 4 is read using the handy terminal 10a, the salesclerk can perform accounting processing and can issue a detailed statement of a remote order. Thus, while wasteful issuance of the label L is curbed, a remote order can be processed smoothly.

### (5) Modification example

Hereinabove, the embodiment according to the present disclosure has been described. However, the present disclosure is not limited to the embodiment described above.

In the foregoing embodiment, the first image PC1 showing the label printing button displayed on the touch panel 4 is exemplified as the first input portion, and the second image PC2 showing the product name display field displayed as a purchasing product on the touch panel 4 is exemplified as the second input portion. However, the first input portion and the second input portion are not limited thereto. In brief, the first input portion need only be an input target having a form in which a visitor can recognize that an operation needs to be performed for accounting, and the second input portion need only be an input target having a form in which a visitor does not generally recognize that an operation needs to be performed.

In the foregoing embodiment, the touch panel 4 is exemplified as a display unit and an input unit. However, the embodiment is not limited thereto. In this case, a display which does not have a function of touch inputting may be used as a display unit, for example, and input equipment of at least one or the like of a keyboard and a mouse may be used as an input unit, for example.

In the foregoing embodiment, the touch panel 4 returns to the initial screen when a state in which the touch panel 4 displays the barcode BC2 has continued for a certain period of time. However, the touch panel 4 does not have to return to the initial screen.

In the foregoing embodiment, the weighing device (weighing device with a label printer) 1 is exemplified as one of the constituents of the remote order processing system 10. However, the weighing device (weighing device with a label printer) 1 may be used in a form not constituting the remote order processing system 10.

In the foregoing embodiment, the weighing device 1 includes the camera 7 and the motion sensors 8. However, at least one of the camera 7 and the motion sensors 8 may be omitted.

At least some of the embodiment and the modification example described above may be arbitrarily combined.

## Claims

1. A weighing device comprising:
a weighing tray (3) on which a product is to be placed;
a weighing unit (5) configured to weigh the product placed on the weighing tray (3);
an input unit (4) configured to receive an input operation of an operator;
a display unit (4) configured to display information;
a label issuing unit (9) configured to issue a label on which an accounting identification code of the product based on a weighing result of the weighing unit (5) is printed;
an input operation recognition unit (31) configured to recognize a touch operation on the input unit (4) as an input operation; and
an output control unit (34) configured to control the label issuing unit (9) and the display unit (4) based on the input operation with respect to the input unit (4),
**characterized in that**
the input operation recognition unit (31) is further configured to recognize an input operation which includes a first input operation and a second input operation,
the first input operation is an input operation with respect to a first input portion (PC1) showing a label printing button displayed on the input unit (4), the first input portion (PC1) being displayed in a form in which a visitor can recognize that a touch operation needs to be performed on the input unit (4) for accounting,
the second input operation is an input operation with respect to a second input portion (PC2) showing a product name display field displayed on the input unit (4), the second input portion (PC2) being displayed in a form in which the visitor does not generally recognize that a touch operation needs to be performed on the input unit (4);
the output control unit (34) is further configured to execute:
first processing in which the label issuing unit (9) issues the label in response to the first input operation, and
second processing in which the display unit (4) displays the accounting identification code, without causing the label issuing unit (9) to issue the label, in response to the second input operation different from the first input operation.

2. The weighing device according to claim 1, wherein
the display unit (4) and the input unit (4) are a touch panel (4),
the first input operation is the input operation of touching an image (PC1) showing the label printing button displayed on the touch panel (4), and
the second input operation is the input operation of touching an image (PC2) showing the product name display field displayed on the touch panel (4).

3. The weighing device according to claim 1 or 2,
wherein the output control unit (34) is configured to end execution of the second processing when a state in which the display unit (4) displays the accounting identification code while the second processing is executed in response to the second input operation has continued for a certain period of time.

4. The weighing device according to any one of claims 1 to 3,
the weighing device being configured to display a weighed value and a price of a purchasing product when the purchasing product is designated from a plurality of kinds of products displayed by the display unit (4) and the purchasing product is put on the weighing tray (3).

5. The weighing device according to claim 4, wherein
the display unit (4) is configured to display the accounting identification code for a certain period of time when the image showing the product name display field has been subjected to a touch operation, and
the display unit (4) is configured to return to an initial screen displaying the plurality of kinds of products after elapse of the certain period of time.

6. A remote order processing system configured to process a remote order transmitted via a network, the remote order processing system comprising:
the weighing device (1) according to any one of claims 1 to 5;
a reading unit (10a) configured to be connected with the weighing device via the network and read the accounting identification code for a purchasing product related to the remote order displayed by the display unit when the second input portion receives the second input; and
a detailed statement issuing unit (10b) configured to be connected with the weighing device via the network and issue a detailed statement of the remote order in accordance with a reading result of the accounting identification code of the reading unit.

## Patentansprüche

1. Wägevorrichtung, die aufweist:
eine Waagschale (3), auf die ein Produkt gelegt werden soll;
eine Wägeeinheit (5), die konfiguriert ist, das auf die Waagschale (3) gelegte Produkt zu wiegen;
eine Eingabeeinheit (4), die konfiguriert ist, eine Eingabebedienung eines Bedieners zu empfangen;
eine Anzeigeeinheit (4), die konfiguriert ist, Informationen anzuzeigen;
eine Etikettenausgabeeinheit (9), die konfiguriert ist, ein Etikett auszugeben, auf dem ein Abrechnungsidentifikationscode des Produkts gedruckt ist, der auf einem Wiegeergebnis der Wägeeinheit (5) basiert;
eine Eingabebedienungs-Erkennungseinheit (31), die konfiguriert ist, eine Berührungsbedienung an der Eingabeeinheit (4) als eine Eingabebedienung zu erkennen; und
eine Ausgabesteuereinheit (34), die konfiguriert ist, die Etikettenausgabeeinheit (9) und die Anzeigeeinheit (4) basierend auf der Eingabebedienung in Bezug auf die Eingabeeinheit (4) zu steuern,
**dadurch gekennzeichnet, dass**
die Eingabebedienungs-Erkennungseinheit (31) ferner konfiguriert ist, eine Eingabebedienung zu erkennen, die eine erste Eingabebedienung und eine zweite Eingabebedienung umfasst,
die erste Eingabebedienung eine Eingabebedienung in Bezug auf einen ersten Eingabeabschnitt (PC1) ist, der eine Etikettendrucktaste zeigt, die auf der Eingabeeinheit (4) angezeigt wird, wobei der erste Eingabeabschnitt (PC1) in einer Form angezeigt wird, in der ein Besucher erkennen kann, dass eine Berührungsbedienung auf der Eingabeeinheit (4) zur Abrechnung durchgeführt werden muss,
die zweite Eingabebedienung eine Eingabebedienung in Bezug auf einen zweiten Eingabeabschnitt (PC2) ist, der ein auf der Eingabeeinheit (4) angezeigtes Produktnamen-Anzeigefeld zeigt, wobei der zweite Eingabeabschnitt (PC2) in einer Form angezeigt wird, in der der Besucher im Allgemeinen nicht erkennt, dass ein Berührungsvorgang auf der Eingabeeinheit (4) durchgeführt werden muss;
die Ausgabesteuereinheit (34) ferner konfiguriert ist, auszuführen:
eine erste Verarbeitung, wobei die Etikettenausgabeeinheit (9) das Etikett als Reaktion auf die erste Eingabebedienung ausgibt, und
eine zweite Verarbeitung, wobei die Anzeigeeinheit (4) den Abrechnungsidentifikationscode anzeigt, ohne die Etikettenausgabeeinheit (9) zu veranlassen, das Etikett auszugeben, als Reaktion auf die zweite Eingabebedienung, die sich von der ersten Eingabebedienung unterscheidet.

2. Wägevorrichtung nach Anspruch 1, wobei
die Anzeigeeinheit (4) und die Eingabeeinheit (4) ein Berührungsfeld (4) sind,
die erste Eingabebedienung die Eingabebedienung des Berührens eines Bildes (PC1) ist, das die Etikettendrucktaste zeigt, die auf dem Berührungsfeld (4) angezeigt wird, und
die zweite Eingabebedienung die Eingabebedienung des Berührens eines Bildes (PC2) ist, das das Produktnamen-Anzeigefeld zeigt, das auf dem Berührungsfeld (4) angezeigt wird.

3. Wägevorrichtung nach Anspruch 1 oder 2,
wobei die Ausgabesteuereinheit (34) konfiguriert ist, die Ausführung der zweiten Verarbeitung zu beenden, wenn ein Zustand, in dem die Anzeigeeinheit (4) den Abrechnungsidentifikationscode anzeigt, während die zweite Verarbeitung als Reaktion auf die zweite Eingabebedienung ausgeführt wird, für eine bestimmte Zeitspanne angedauert hat.

4. Wägevorrichtung nach einem der Ansprüche 1 bis 3,
wobei die Wägevorrichtung konfiguriert ist, einen gewogenen Wert und einen Preis eines Kaufprodukts anzuzeigen, wenn das Kaufprodukt aus mehreren Produktarten, die von der Anzeigeeinheit (4) angezeigt werden, bestimmt wird und das Kaufprodukt auf die Waagschale (3) gelegt wird.

5. Wägevorrichtung nach Anspruch 4, wobei
die Anzeigeeinheit (4) konfiguriert ist, den Abrechnungsidentifikationscode für eine bestimmte Zeitspanne anzuzeigen, wenn das Bild, das das Produktnamen-Anzeigefeld zeigt, einer Berührungsbedienung unterzogen worden ist, und
die Anzeigeeinheit (4) konfiguriert ist, nach Ablauf der bestimmten Zeitspanne zu einem Ausgangsbildschirm zurückzukehren, der die mehreren Produktarten anzeigt.

6. Fernauftragsverarbeitungssystem, das konfiguriert ist, einen über ein Netzwerk übertragenen Fernauftrag zu verarbeiten, wobei das Fernauftragsverarbeitungssystem aufweist:
die Wägevorrichtung (1) nach einem der Ansprüche 1 bis 5;
eine Leseeinheit (10a), die konfiguriert ist, mit der Wägevorrichtung über das Netzwerk verbunden zu sein und den Abrechnungsidentifikationscode für ein Einkaufsprodukt in Bezug auf die Fernbestellung zu lesen, der von der Anzeigeeinheit angezeigt wird, wenn der zweite Eingabeabschnitt die zweite Eingabe empfängt; und
eine Einheit (10b) zur Ausgabe einer detaillierten Erklärung, die konfiguriert ist, über das Netzwerk mit der Wägevorrichtung verbunden zu sein und eine detaillierte Erklärung der Fernbestellung in Übereinstimmung mit einem Leseergebnis des Abrechnungsidentifikationscodes der Leseeinheit auszugeben.

## Revendications

1. Dispositif de pesage, comprenant :
un plateau de pesage (3) sur lequel un produit est placé ;
une unité de pesage (5) prévue pour le pesage du produit placé sur le plateau de pesage (3) ;
une unité d'entrée (4) prévue pour recevoir une opération d'entrée d'un opérateur ;
une unité d'affichage (4) prévue pour afficher des informations ;
une unité d'édition d'étiquette (9) prévue pour éditer une étiquette sur laquelle est imprimée un code d'identification comptable du produit sur la base d'un résultat de pesage de l'unité de pesage (5) ;
une unité de reconnaissance d'opération d'entrée (31) prévue pour reconnaître une opération tactile sur l'unité d'entrée (4) en tant qu'opération d'entrée ; et
une unité de commande de sortie (34) prévue pour commander l'unité d'édition d'étiquette (9) et l'unité d'affichage (4) sur la base de l'opération d'entrée relative à l'unité d'entrée (4), **caractérisé en ce que**
l'unité de reconnaissance d'opération d'entrée (31) est en outre prévue pour reconnaître une opération d'entrée comprenant une première opération d'entrée et une deuxième opération d'entrée,
la première opération d'entrée étant une opération d'entrée relative à une première partie d'entrée (PC1) présentant bouton d'impression d'étiquette affiché sur l'unité d'entrée (4), ladite première partie d'entrée (PC1) étant affichée sous une forme permettant à un visiteur de reconnaître qu'une opération tactile nécessite d'être effectuée sur l'unité d'entrée (4) pour comptabilisation,
la deuxième opération d'entrée étant une opération d'entrée relative à une deuxième partie d'entrée (PC2) représentant un champ d'affichage de nom de produit affiché sur l'unité d'entrée (4), ladite deuxième partie d'entrée (PC2) étant affichée sous une forme ne permettant généralement pas à un visiteur de reconnaître qu'une opération tactile nécessite d'être effectuée sur l'unité d'entrée (4) ;
l'unité de commande de sortie (34) est en outre prévue pour exécuter :
un premier traitement où l'unité d'édition d'étiquette (9) édite l'étiquette en réaction à la première opération d'entrée, et
un deuxième traitement où l'unité d'affichage (4) affiche le code d'identification comptable, sans provoquer l'édition de étiquette par l'unité d'édition d'étiquette (9), en réaction à la deuxième opération d'entrée, différente de la première opération d'entrée.

2. Dispositif de pesage selon la revendication 1, où l'unité d'affichage (4) et l'unité d'entrée (4) sont un écran tactile (4),
la première opération d'entrée est l'opération d'entrée par contact tactile d'une image (PC1) représentant le bouton d'impression d'étiquette affiché sur l'écran tactile (4), et
la deuxième opération d'entrée est l'opération d'entrée par contact tactile d'une image (PC2) représentant le champ d'affichage de nom de produit affiché sur l'écran tactile (4) .

3. Dispositif de pesage selon la revendication 1 ou la revendication 2,
où l'unité de commande de sortie (34) est prévue pour terminer l'exécution du deuxième traitement lorsqu'un état où l'unité d'affichage (4) affiche le code d'identification comptable pendant que le deuxième traitement est exécuté en réaction à la deuxième opération d'entrée s'est poursuivi pendant une certaine durée.

4. Dispositif de pesage selon l'une des revendications 1 à 3, ledit dispositif de pesage étant prévu pour afficher une valeur de pesage et un prix d'un produit acheté lorsque le produit acheté est désigné parmi une pluralité de types de produits affichés par l'unité d'affichage (4) et que le produit acheté est placé sur le plateau de pesage (3).

5. Dispositif de pesage selon la revendication 4, où
l'unité d'affichage (4) est prévue pour afficher le code d'identification comptable pendant une durée définie lorsque l'image représentant le champ d'affichage de nom de produit a été soumise à une opération tactile, et
l'unité d'affichage (4) est prévue pour retourner à un écran initial affichant la pluralité de types de produits après écoulement de la durée définie.

6. Système de traitement de commande à distance, prévu pour traiter une commande à distance transmise via un réseau, ledit système de traitement de commande à distance comprenant :
le dispositif de pesage (1) selon l'une des revendications 1 à 5 ;
une unité de lecture (10a) prévue pour être reliée au dispositif de pesage via le réseau et lire le code d'identification comptable pour un produit acheté relativement à la commande à distance affichée par l'unité d'affichage lorsque la deuxième partie d'entrée reçoit la deuxième entrée ; et
une unité d'édition de relevé détaillé (10b) prévue pour être reliée au dispositif de pesage via le réseau et éditer un relevé détaillé de la commande à distance conformément à un résultat de lecture du code d'identification comptable de l'unité de lecture.
